# EUROPEAN PATENT APPLICATION

(11) **EP 1 078 562 A2**
(43) Date of publication of application: **28.02.2001**
(21) Application number: 00307294.9
(22) Date of filing: 24.08.2000
(51) Int. Cl.: A01B 43/00

(54) **Soil preparation implement**

(30) Priority: 24.08.1999 US 379539
(71) Applicant: Clark Equipment Company, Fargo, North Dakota 58102 (US)
(72) Inventor: Vought, Michael L., Grove City Minnesota 56243 (US)
(74) Representative: Kinsler, Maureen Catherine

(57) **Abstract**

An implement (10) for preparing a ground profile by extracting, and optionally windrowing, debris from the ground profile and by generally planing the ground profile, includes a roller assembly (16) having a ground engageable roller, a drive mechanism being in mechanical communication with the roller for imparting rotational motion thereto; a first frame assembly (12) having a first frame member (24), the first frame member (24) being operably coupled to the roller and being disposed in a pivotal relationship with the roller about a first pivotal axis, a mount (22) configured for attachment to a prime mover being operably pivotally coupled to the first frame member (24) along a second pivotal axis, the second pivotal axis being generally orthogonally disposed with respect to the first pivotal axis, and a wheel assembly (28) being pivotally coupled to the first frame member (24) and being shiftable between a ground engageable disposition and a carry disposition.

## Description

### Background of the Invention

### 1. Field of the Invention

The present invention relates to devices for extracting and separating rocks and other debris from a soil profile and, in particular, the present invention relates to devices which are mountable on a prime mover and which windrow separated rocks and other debris.

### 2. Background of the Invention

Preparing land for construction of buildings, parking lots, and golf courses often involves extracting rocks and other debris from an upper portion of the soil profile and may involve generally planing the prepared soil profile as well. A number of implements have been prepared for those purposes.

U.S. Patent No. 4,315,546, issued to Fahrenholz February 16, 1982, discloses a double roll rock windrower. The rock windrower of Fahrenholz includes a main roller and an auxiliary roller. The main roller is moved along the ground and is rotationally driven under power. The roller is disposed at an oblique angle with respect to the direction of travel, so that dislodged rocks are moved axially along the roller and laterally to the direction of movement, until the rocks are discharged at the trailing end of the roll in a windrow. The auxiliary roller is mounted above the main roller and spaced apart from the main roller. The auxiliary roller is unpowered. The auxiliary roller acts to prevent rocks from spilling over the main roller, thus making it possible to form larger windrows, while permitting dirt clods and some foreign material to pass between the main and auxiliary rollers. The auxiliary roller is mounted on arms which are pivotally mounted relative to the mounting for the main roller, thereby permitting the second roller to be spaced as desired relative to the main roller.

U.S. Patent No 4,516,639, issued to Hammarhund et al., May 14, 1985, discloses a powered landscape rake for fine grading of a landscape surface, as well as stone and debris removal therefrom. The rake is mounted to a tractor and includes a drum rotatably mounted on a drum frame. The drum frame, in turn, is mounted to a turntable assembly for allowing the drum frame to pivot about an axis generally perpendicular to the drum frame and which is located generally midway of the drum frame. A frame member is attached to the turntable and extends to a point under the tractor frame in front of the tractor front wheels. The free end of the frame member is mounted to pivot and swivel on a frame attachment member. First and second cylinders are further attached to the turntable for positioning the drum frame at any desired angle in a vertical plane to the landscape and to allow the drum frame to sway in a horizontal plane about the front frame attachment point. The drum can be rotated in either direction by a hydraulic motor. The hydraulic motor and drum provide a kicking-type action to the soil of the landscape surface to further provide a smooth, fine, finished grade for seeding and covering seed.

U.S. Patent No. 5,060,732, issued to Baskett October 29, 1991, discloses a cylinder-type, ground-raking attachment for a bucket-equipped tractor. The ground-raking attachment includes a tubed, cylindrical rotor. The cylindrical rotor works the soil and simultaneously rakes the ground free of rocks, refuse, roots, sticks, and other debris which is then transferred to the tractor bucket by action of the rotor.

U.S. Patent No. 5,261,218, issued to Jones et al., November 16, 1993, discloses a powered rake having a debris windrowing mechanism. The powered rake includes a main frame for coupling to a tractor, a subframe mounted for pivotal movement relative to the main frame about an upright pivot axis, a roller pivotal with the subframe at an oblique angle relative to the direction of travel, and a material control member including a blade extending along the length of the roller and presenting a gap therebetween. The subframe is preferably pivotal for presenting the roller at an oblique angle to the right or left with respect to the intended direction of travel, thereby permitting the powered rake to continuously windrow the debris in the path of the roller. The roller is rotatably mounted on a pair of downwardly and forwardly extending legs which present substantially open areas outboard the roller. These substantially open areas permit debris to pass freely outboard into a windrow without obstruction from the frame or subframe. The roller preferably presents a plurality of circumferentially spaced, radially projecting splines. The splines are spirally oriented about the longitudinal axis of the roller to present an even load on the roller as the roller rotates in engagement with the soil.

U.S. Patent No. 5,505,268, issued to McPherson et al., April 9, 1996, discloses a bi-directional field implement for preparing a field. The bi-directional field implement includes a ground engaging device which allows the implement to be pushed or pulled on the field. The ground engaging device includes a reversible roller with projections joined to an outer surface thereof to engage the ground. The projections do not extend along the complete length of the roller, but rather only a portion thereof. The implement includes reversible/removable guards for keeping the disturbed soil in front of the roller when the guards are positioned to extend in the direction of travel of the vehicle to which the implement is attached. Such guards must be manually repositioned based on the expected direction of travel.

While some or all of these implements extract and windrow rocks and other debris and plane the profile of the soil being prepared, there is a need for an implement which is mountable to a prime mover such as a Skid Steer™, which will extract and windrow debris from the soil profile, which will generally plane or level the soil profile as well, and which operates when being either pushed or towed. Further, there is a need for an implement in which the profiling device a moveable proximate fixed objects, such as a tree or a building to effect a desired ground profile immediately adjacent to the object. Additionally, the implement should occupy minimal space on a transport vehicle when the implement is being transported between sites. The device should be simple to construct and maintain.

Various aspects of the present invention are defined in the independent claims. Some preferred features are defined in the dependent claims.

### Summary of the Invention

This invention substantially meets the aforementioned needs of the industry by providing an implement for preparing a soil profile by extracting and optionally windrowing debris from the soil profile and by generally planing the soil profile as well. The spiral roller effects a back and forth profiling of the ground surface while at the same time being useable to windrow large debris that is unearthed. The wheel assembly is placeable on top of the roller for permitting the roller to operate in close proximity to objects. The position on top of the roller is useful for minimizing the footprint of the implement for transportation of the implement.

The invention may include a roller assembly and a first frame. The roller assembly may, in turn, include a generally cylindrical roller and a reversible drive in mechanical communication with the roller. The first frame may be in vertical and horizontal pivotal relationships with the roller and may comprise a mount, a longitudinal frame member, and a wheel assembly. The mount may be configured for attachment to a prime mover. The longitudinal frame assembly may be rigidly attached to the mount and may be in an overarching relationship with the roller. The wheel assmbly may be in a generally horizontal, pivotal relationship with respect to the longitudinal frame member. The roller may further include a multiplicity of extraction members, which may extend generally radially from a cylindrical roller surface and may include a generally cylindrical structure.

The implement may further comprise a second frame in a generally vertical pivoting relationship with the mount and a generally horizontal pivotal relationship with the roller. The second frame may include structure limiting vertical pivoting of the second frame. The second frame may also include a roller subframe and a plurality of roller support plates. The roller subframe may be in a vertical pivoting relationship with the mount. The roller support plates may be in a horizontal pivoting relationship with the roller subframe and may be rigidly attached to the roller assembly. The roller assembly may further include a drag bar and first and second end plates. The drag bar may be rigidly attached to the roller support plates. The end plates may be rotatably attached to the roller, the first end plate supporting the drive.

The implement may further include a cross member and first and second wheel assemblies may be present. The cross member may be generally vertically pivoted to the longitudinal frame member. The first and second wheel assemblies may be pivotally attached proximate respective first and second ends of the cross member.

There is further provided a generally cylindrical roller configured for extracting and optionally windrowing debris from soil profile and for planig the soil profile when rotated by a soil preparation implement. The roller may include a central member, a roller flight, and a multiplicity of extraction members. The central member may be disposed generally coincident or coaxial with a longitudinal axis of the roller. The roller flight may be generally spirally affixed to the central member. The multiplicity of extraction members may extend from a roller flight peripheral surface. The central member may include a generally square cross section and may define a cavity generally coincident or coaxial to the longitudinal axis of the roller. First and second generally and oppositely disposed flights may be present. The flight and extracting members may be configured and disposed for back-and-forth displacement of the extracted debris.

The present invention may be an implement for preparing a ground profile by extracting, and optionally windrowing, debris from the ground profile and by generally planing the ground profile, includes a roller assembly having a ground engageable roller, a drive mechanism being in mechanical communication with the roller for imparting rotational motion thereto. A first frame assembly has a first frame member, the first frame member being operably coupled to the roller and being disposed in a pivotal relationship with the roller about a first pivotal axis, a mount configured for attachment to a prime mover being operably pivotally coupled to the first frame member along a second pivotal axis, the second pivotal axis being generally orthogonally disposed with respect to the first pivotal axis. And a wheel assembly being pivotally coupled to the first frame member and being shiftable between a ground engageable disposition and a carry disposition.

There is yet further provided a method of using an implement attached to a prime mover to extract debris from a soil profile, optionally windrow extracted debris, and generally plane the soil profile

### Brief Description of the Drawings

Figure 1 is a perspective view of one embodiment of the soil preparation implement of this invention with a first embodiment of a roller operably present;
Figure 2 is a perspective view of the soil preparation implement of Figure I with a second embodiment of a roller operably present;
Figure 3 is a perspective view of the roller depicted in Figure 2;
Figure 4 is a perspective view of another embodiment of the soil preparation implement of this invention in a first operating position with a third embodiment of a roller operably present;
Figure 5 is a side view of the soil preparation implement and roller of Figure 4;
Figure 6 is a perspective view of the roller of Figure 4;
Figure 7 is a plan view of the roller of Figure 4;
Figure 8 is a perspective view of the soil preparation implement and roller of Figure 4 in a second operating position;
Figure 9 is a side view of the soil preparation implement and roller of Figure 4 in the second operating position of Figure 8;
Figure 10 is a rear perspective view of the mount of the soil preparation implement of Figures 1-9;
Figure 11 is a perspective view of the soil preparation implement and roller of Figure 4 including a further embodiment of the guards; and
Figure 12 is a perspective view of the attaching devices of the further embodiment of the left guard.

### Detailed Description of the Drawings

Comprehension of this invention can be gained through reference to the drawings in conjunction with a thorough review of the following explanation. In order to facilitate a full appreciation of the invention, an overview of an exemplary embodiment is initially provided. The overview is followed by more detailed explanation.

The soil preparation implement of this invention mounts on a prime mover or vehicle with vertical lifting means and a plurality of hydraulic ports. The soil preparation implement employs a pivotally mounted, rotating device for planing or leveling a soil profile and for extracting and windrowing rocks and other debris from an upper portion of the soil profile. The rotary device of this invention includes reversible rotating means and a horizontal pivot such that the soil preparing implement may function when being either pushed or towed and may further windrow extracted rocks and debris to either side.

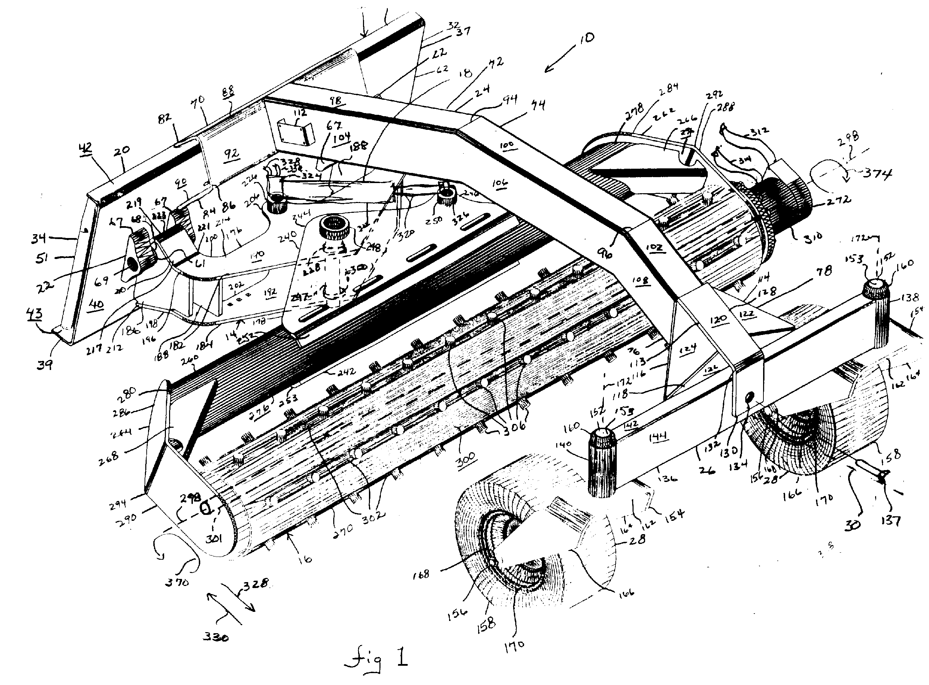

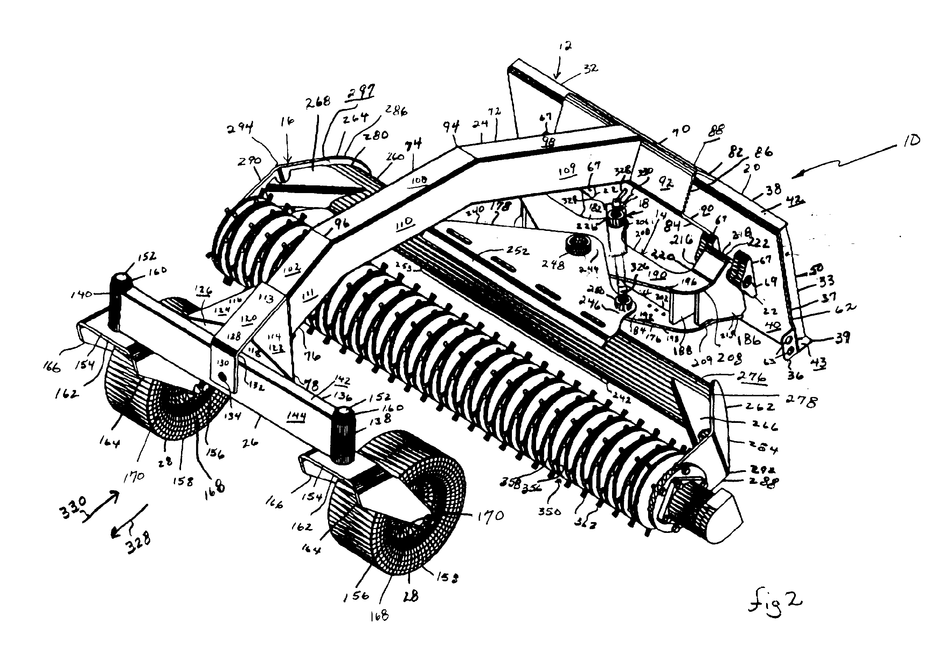

One embodiment of a soil preparation implement of this invention is depicted in Figures 1 and 2 generally at 10 and broadly includes first frame assembly 12, second frame assembly 14, roller assembly 16, and actuator 18. First frame assembly 12, in turn, includes mount 20, pivoting mount 22, frame member 24, cross member 26, and one or more wheel assemblies 28 and may be characterized by longitudinal axis 30 (Figure 1).

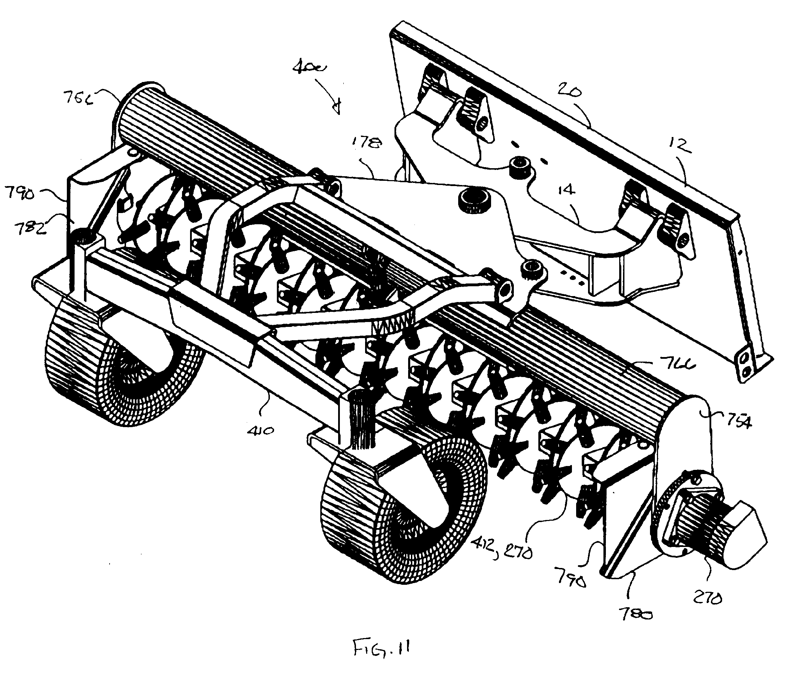

As best viewed in Figures 1-2 and 9-10, mount 20 may include channel member 32, peripherally disposed left and right attachment members 33 and 34, upper attachment member 35, and, optionally, at least one bracket 36. In this embodiment, unitary channel member 32 includes generally vertical element 37 and respective upper and lower elements 38 and 39. Upper and lower elements 38 and 39 extend generally rearwardly and perpendicularly (or otherwise transversely) from vertical element 37 in this embodiment. Vertical element 37 displays front and rear surfaces 40 and 41. Upper and lower elements 38 and 39 display respective upper surfaces 42 and 43 lower surfaces 44 and 45. Left and right attachment members 33 and 34 may be generally mirror image and may include respective, generally vertical first portions 46 and 47, angled second portions 48 and 49, and outboard portions 50 and 51. In this embodiment, first portions 46 and 47 and second portions 48 and 49 are joined at bends 52 and 53, respectively. Second portions 48 and 49 angle between respective bends 52 and 53 and rear portions of upper surface 43 of lower element 39. First portions 46 and 47 may be attached to rear surface 41 and extend between bends 52 and 53 and proximate lower surface 44 of upper element 38. Outboard portions 50 and 51 may extend from outboard edges of first portions 46 and 47 and second portions 48 and 49. A reinforcement 54 may be joined to left and right attachment members 33 and 34 proximate portions of bends 53 and 54. Second portions 48 and 49 define respective slots 55 and 56 in this embodiment. Upper attachment member 35 may include inboard portion 57 and respective left and right outboard portions 58 and 59. Inboard portion 57 and upper element 38 may cooperate with left and right outboard portions to define left and right slots 60 and 61. Bracket 36 may extend from a lower portion of left edge 62 of vertical element 37 and defines a plurality of apertures 63 in this embodiment. Exemplary slots 55, 56, 60, and 61 are configured and disposed to enable implement 10 to be quickly and reversibly mounted to a prime mover such as a Skid Steer™ (Melroe Company, Fargo, North Dakota). However, adapting this invention to mount to other self-powered implements, such as tractors, e.g., using a 3-point hitch, is a technique apparent to the person of ordinary skill in the art and is contemplated to be within the scope of this invention as well. Bracket 36 provides attaching means useful when implement 10 is secured to a trailer for transport.

With respect to Figures 1 and 2, a pair of pivoting mounts 22 are affixed to front surface 40 of mount 20. It should be noted that there are two mounts 22, each having two sets of brackets 67, one such set being partially obscured by the frame member 24 in both Figures 1 and 2, the left mount 22 being visible in Figure 1 and the right mount 22 being visible in Figure 2. Each exemplary pivoting mount 22 includes a pair of spaced apart brackets 67 and pivot pin 68. Each bracket 67 defines bore 69 therein. Bore 69 is disposed and dimensioned within brackets 67 to accommodate opposed pivot pins 68. Pivot pin 68 is rotatably carried in a respective bore 69 of each of the spaced apart brackets 67 and may be scored within bores 69 by any of several means known to the art.

Exemplary frame member 24 of second frame assembly 14 includes channel member 70, respective first, second, and third longitudinal members 72, 74, 76, and brace 78. Frame member 24 may be disposed in an overarching relationship to second frame assembly 14 and roller assembly 16. Channel member 70 includes upper, lower, and central elements 82, 84, and 86. Respective upper and lower elements 82 and 84 display upper surfaces 88 and 90 and generally opposed lower surfaces (not depicted). Central element 86 displays front surface 92 and a rear surface (not shown).

First and second longitudinal members 72 and 74, and second and third longitudinal members 74 and 76 adjoin at respective bends 94 and 96 to define the generally overarching shape of frame member 24 with respect to second frame assembly 14 and roller assembly 16. First, second, and third longitudinal members 72, 74, and 76 display respective upper surfaces 98, 100, and 102, respective right surfaces 104, 106, and 108, and left surfaces 109, 110, and 111. Exemplary bracket 112 is mounted proximate right surface 104 of first longitudinal member 72.

In the embodiments of Figures 1 and 2, brace 78 includes respective upper, left, right, and front elements 113, 114, 116, and 118. Upper, left, right, and front elements 112, 114, 116, and 118 display respective upper surfaces 120, 122, 124, and 126. Upper element 113 is substantially unitary in this embodiment, but may be considered to include upper and lower members 128 and 130. Upper and lower members 128 and 130 adjoin at bend 132 and lower member 130 defines bore 134.

Adjacent portions of channel member 70, first, second, and third longitudinal members 72, 74, and 76, and brace 78 may be substantially rigidly adjoined by means such as welding. Upper element 82 is welded or otherwise substantially rigidly bonded to upper surface 42 of channel member 32 and lower element 84 is welded or otherwise substantially rigidly bonded to front surface 40 of channel member 32 in one embodiment.

Cross member 26 of second frame assembly 14 includes inboard element 136 and respective left and right receiving elements 138 and 140. Element 136 displays upper surface 142, front surface 144 and lower and rear surfaces (not depicted) and defines a bore (not shown). The bore defined by inboard element 136 is dimensioned and disposed to generally align with bore 134 defined in brace 78. A bore may also be defined by front element 118 of brace 78 to generally align with bore 134 and the bore defined by inboard element 136. Brace 78 and element 136 may be pivotally coupled when a fastener, such as pin 137 (Fig 1.), is extended through bore 134 and the bores defined in inboard element 136 and front element 118. Such pivotal coupling provides for rotation of cross member 26 relative to frame member 24, responsive, e.g., to undulations in the soil surface being prepared by implement 10.

Each wheel assembly 28 includes pivot 152, frame 154, axle 156, wheel 158, and collar 160. Pivot 152 generally includes an upwardly directed shaft. Each pivot 152, as well as one or more bearings or bearing sets known to the art, may be dimensioned to be rotatably accommodated within bores 153 defined in left and right rceiving elements 138 and 140. Collars 160 are coupled to pivots 152 to secure pivots 152 within bores 153. Exemplary unitary frames 154 include generally horizontal elements 162 and respective left and right vertical elements 164 and 166. Pivots 152 may be fixed to generally central portions of horizontal elements 162 by means known to the art, such as welding. Lower portions of left and right vertical elements 164 and 166 define generally aligned bores (not shown) dimensioned to receive axle 156. Fasteners such as nuts 168 may be threadably received on one or both ends of axles 156. Each wheel assembly 28 may further include a hub 170. In one embodiment, wheel 158 is a pneumatic tire mounted to hub 170. Hubs 170 may further define a central bore (not shown) dimensioned to accommodate axles 156 and bearing assemblies to enable hubs 170 and mounted wheels 158 to freely rotate about axles 156. Axles 156 may be offset from longitudinal axes 172 of pivots 152 to permit wheels 158 to castor.

Pivotally coupling cross member 26 to brace 78 in a manner such as that described above enables cross member 26 to vertically pivot independently of the remainder of frame assembly 12 to better operate over terrain of varying contours. Moreover, pivotally mounting wheel assemblies 28 to cross member 26 enables implement 10 to be turned and to operate while being either pushed or towed. For instance, in Figures 1 and 21 wheel assemblies 28 are depicted in positions occupied when implement 10 is being operated (pushed) in a forward direction. However, wheel assemblies 28 may be pivoted to allow implement 10 to be turned or operated while being towed in a reverse direction as well.

Referring to Figures 1-2, 4-5, and 8-9, second frame assembly 14 includes rear frame (comprising a roller subframe) 176 and front frame 178 (comprising a roller support). Rear frame 176, in turn, includes respective upper and lower frame elements 182 and 184 and pairs of respective outboard and inboard vertical elements 186 and 188. Respective upper and lower frame elements 182 and 184 are generally parallel and spaced apart and present upper surfaces 190 and 192, lower surfaces 193 and 194, outer edges 196 and 198, and inner edges 200 and 202. Upper frame element 182 defines generally central lobe 206. A corresponding and generally central lobe may also be defined by lower frame element 184 at a substantially similar location. Upper and lower frame elements 182 and 184 further define left outboard portions 208 and 209 and right outboard portions 210 and 212. Left outboard portions 208 and 209 are substantially mirror images of right outboard portions 210 and 212 in the embodiments depicted. Left and right outboard portions 208 and 210 of upper frame element 182 include generally sloping first portions 216 and 217 and second portions 218 and 219. First portions 216 and 217 adjoin the remainder of upper frame element 182 at bends 220 and 221 and respective first portions 216 and 217 adjoin second portions 218 and 219 at bends 222 and 223. Outboard elements 186 extend between lower surface 193 of upper frame element 182 and upper surface 192 of lower flame element 184 proximate respective outer edges 196 and 198 of upper and lower frame elements 182 and 184. Inboard vertical elements 188 likewise extend between lower surface 193 of upper frame element 182 and upper surface 192 of lower frame element 184, but are disposed proximate inner edges 200 and 202. Outboard and inboard vertical elements 186 and 188 are dimensioned and shaped to accommodate contours present in outboard portions of respective upper and lower frame elements 182 and 184.

Outboard and inboard vertical elements 186 and 188 further define substantially aligning bores (not shown) dimensioned to accommodate pivots 68 of pivoting mounts 22 in this embodiment. The bores defined in outboard and inboard vertical elements 186 and 188 are further located such that rear frame 176 pivots upwardly to allow second frame assembly 14 and roller assembly 16 of the implement 10, e.g., to generally follow terrain contours during operation. However, rear frame 176 pivots downwardly only until faces presented by rear surfaces of outboard and inboard vertical elements 186 and 188 contact front surface 40 of mount 20. By limiting downward pivotal movement of rear frame 176, implement 10 may be completely raised by the Skid Steer™.

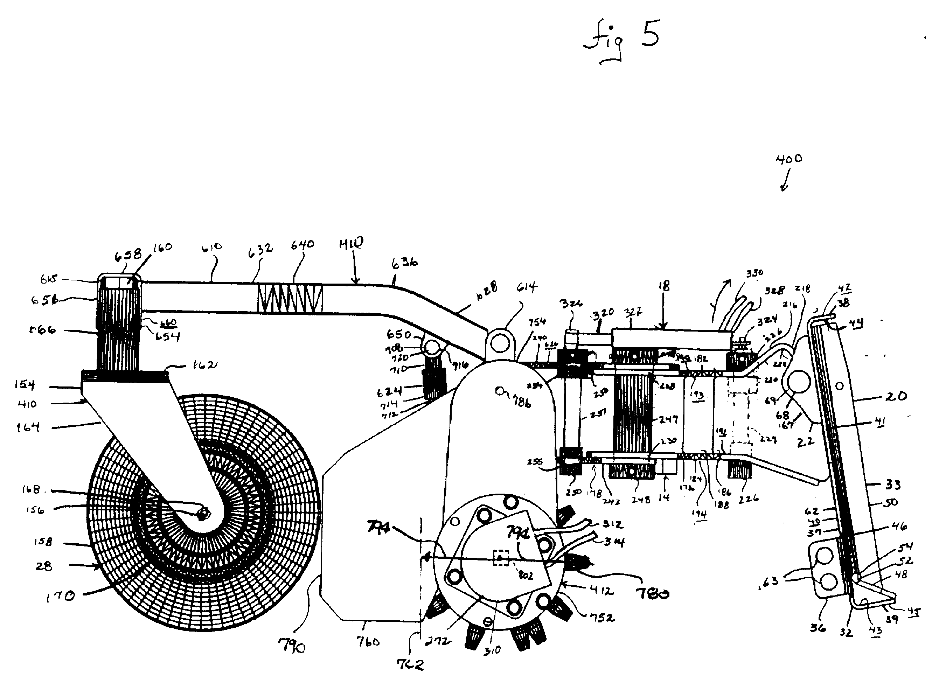

Referring to Figures 1 and 5, cylinder mounts 226 may be affixed to upper and lower frame elements 182 and 184 in a generally central portion of lobe 206. Pivot 227 may extend between cylinder mounts 226 in some embodiments. Cylinder mount 226 is displaced rearwardly from bores 228 and 230 defined in a generally forward portion of upper and lower frame elements 182 and 184. Bores 228 and 230 are in registry and together accommodate a pivotable mount for roller assembly 16.

As shown in Figures 1-2, 4-5, and 8-9, front frame 178 includes upper and lower roller assembly support plates 240 and 242, respectively. Lower roller assembly support plate 242 is generally a mirror image of upper roller assembly support plate 240 in this embodiment. Rear portions of upper roller assembly support plate 240 define center and left lobes 244 and 246, respectively. Right lobe 244 and a corresponding lobe in lower support plate 242 generally overlie and underlie portions of upper and lower frame elements 182 and 184, respectively. Right lobe 244 and a corresponding lobe in lower support plate 242 accommodate a central structure such as pivot 248 to pivotably couple upper roller support plate 240 to upper frame element 182 and lower roller support plate 242 to lower frame element 184. Pivot 248 may include pin 247 rotatably disposed in bores 228 and 230. Bores 228 and 230 are also defined in upper and lower roller assembly support plates 240 and 242.

Referring to Figures 1 and 5, left lobe 246 and the corresponding portion of lower support plate 242 accommodate cylinder mount 250 disposed in bores 254 and 255 of upper and lower support plates 240 and 242. Pivot 251 may be affixed between cylinder mounts 250 in one embodiment. Arcuate portions 252 and 253 are defined proximate front edges of upper and lower roller assembly support plates 240 and 242 in this embodiment. Arcuate portion 253 is a generally mirror image of arcuate portion 252.

As seen in Figures 1 and 2, exemplary roller assembly 16 of implement 10 includes rear member (comprising a drag bar) 260, left and right end plates 262 and 264, left and right brace members 266 and 268, roller 270, and hydraulic motor assembly 272. In this embodiment, rear member 260 is generally circular in cross-section and displays exterior surface 276 and respective left and right ends, 278 and 280. Exterior surface 276 is dimensioned to conform to arcuate portions 252 and 253 of respective of upper and lower roller assembly support plates 240 and 242 when a generally central portion of rear member 260 is affixed to upper and lower roller assembly support plates 240 and 242. Respective left and right ends 278 and 280 of rear member 260 may angle outwardly from rear to front.

Exemplary left and right end plates 262 and 264 are mirror images and generally unitary, but may be considered to include respective rear portions 284 and 286 and front portions 288 and 290. Respective rear portions 284 and 286 and front portions 288 and 290 are joined at bends 292 and 294. End plates 262 and 264 display interior surfaces 296 and 297. Rear portions 284 and 286 are angled with respect to front portions 288 and 290 such that rear portions 284 and 286 accommodate, and may be joined or bonded to, left and right ends 278 and 280 of rear member 260 and such that front portions 288 and 290 extend generally perpendicularly to longitudinal axis 298 of roller 270.

In the embodiment of Figures 1 and 2, left brace member 266 is substantially a mirror image of right brace member 268. Also in these embodiments, left and right brace members 266 and 268 are generally arcuate or angular in cross-sectioa Outboard edges of left and right brace members 266 and 268 are generally configured to accommodate interior surfaces 296 and 297 of left and right end plates 262 and 264 and rear edges of left and right brace members 266 and 268 are configured to accommodate exterior surface 276 of rear member 260 to allow bonding, thus bracing, between rear member 260 and end plates 262 and 264.

Referring to Figure 1, roller 270 displays generally cylindrical exterior surface 300 and includes axle 301 (depicted in phantom) disposed generally coincident or coaxial to longitudinal axis 298 of roller 270. Axle 301 is rotatably affixed to front portion 290 of right end plate 264 and extends through a generally centrally defined bore in front portion 288 of left end plate 262. A multiplicity of peg rows 302 are present on exterior surface 300 of roller 270. In this embodiment, about six peg rows 302 are present, however, more or fewer peg rows 302 are contemplated to be within the scope of this invention. Each peg row 302 includes a multiplicity of extracting members such as pegs 306. Peg rows 302 extend generally parallel to longitudinal axis 298 of roller 270 and are substantially equally spaced apart in this embodiment. In one embodiment, pegs 306 present an offset or staggered or spiral relationship which becomes apparent as roller 270 is rotated about axis 298.

Hydraulic motor assembly 272 includes hydraulic motor 310 and hydraulic hoses 312 and 314. Hydraulic hoses 312 and 314 extend between hydraulic motor 310 and hydraulic fitting, present on the prime mover to which implement 10 is attached. In one embodiment, hydraulic motor 310 is reversible, the direction of rotation being determined by which hydraulic hose 312 or 314 conveys hydraulic fluid entering hydraulic motor 310. Hydraulic motor 310 is operably coupled proximate an outboard surface of front portion 288 of left end plate 262 and is rotatably mounted to axle 301 present within roller 270 (described above). A shield assembly (not depicted) may be present to enclose all or portions of hydraulic motor assembly 272 in one embodiment for protection from rocks and debris.

The hydraulic motor 310 is directly coupled to the roller 270 without the need for an intervening chain drive or gear drive train as in the past. The direct drive increases efficiency of the work transfer from the hydraulic motor 310 to the roller 270 and eliminates maintenance difficulties and the cost of an intervening chain drive or gear drive train. The selected hydraulic motor 310 that is preferred is of very robust construction so that in the event that the hydraulic motor 310 strikes an object, the housing of the hydraulic motor 310 is able to absorb the force of the impact without damage to the hydraulic motor 310.

Referring to Figures 1 and 5, exemplary actuator 18 is hydraulically operated and includes ram 320, cylinder 322, couplers 324 and 326, and hoses 328 and 330. Couplers 324 and 326 may be pivotally attached to respective cylinder 322 and ram 320. Coupler 324 mounts to cylinder mount 226 and coupler 326 pivotally mounts to cylinder mount 250 in one embodiment. In an another embodiment, coupler 324 is mounted between upper and lower frame elements 182 and 184, e.g., to pivot 227, and coupler 326 is mounted between upper and lower roller assembly support plates 240 and 242 to pivot 251. Hydraulic hoses 328 and 330 may extend between actuator 18 and the prime mover when implement 10 is operably attached thereto. Operating actuator 18 such that ram 320 extends away from cylinder portion 322 pivots cylindrical mounts 250 away from rear frame 176 and thus pivots the left side of roller assembly 16 forward. Conversely, operating actuator 18 to retract ram 320 within cylinder portion 322 pivots cylinder mounts 250 toward rear frame 176, hence pivots the left side of roller assembly 16 rearward. Thus, actuator 18 enables roller 270 or 350 (discussed below) to be horizontally pivoted, hence angled, with respect to longitudinal axis 30 of implement 10.

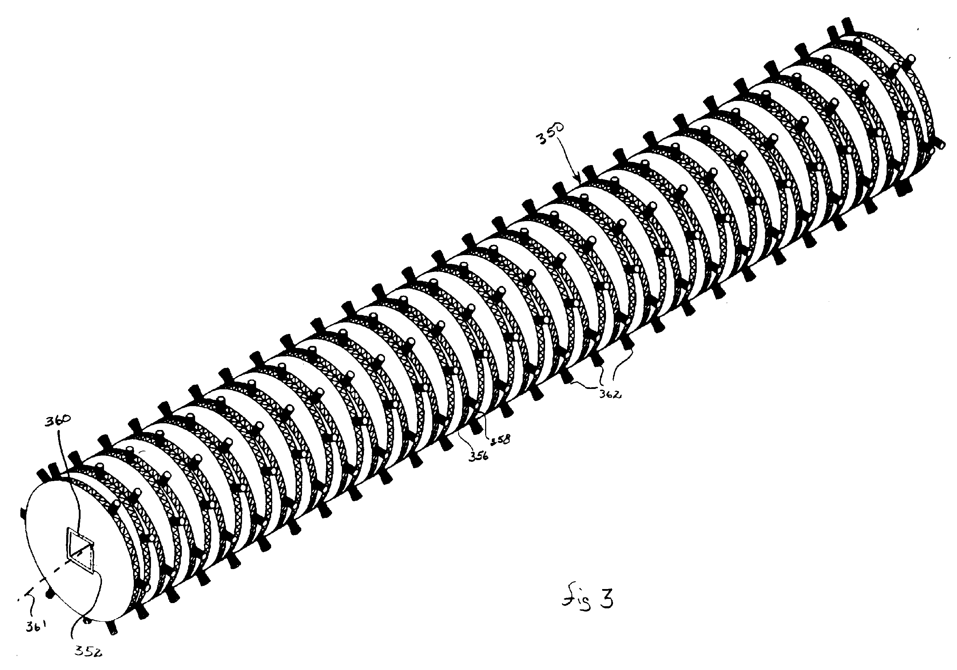

Another embodiment of the roller of this invention is depicted in Figures 2 and 3 at 350 and includes a central member such as axial portion 352, about which at least one blade (flight) such as respective first and second blades 356 and 358 spirally or belically extend in the manner of flights of an auger. Axial portion 352 defines cavity 360. In one embodiment, cavity 360 presents a square, cross-sectional geometry and extends generally coaxially with longitudinal axis 361 of roller 350. A multiplicity of extraction members such as pegs 362 are affixed to peripheral surfaces of blades 356 and 358.

First and second blades 356 and 358 may represent a single blade (or flight) extending in alternate directions. However, in another embodiment, blades 356 and 358 may separately spiral from axial portion 353 in substantially opposite directions. The pitch of first and second blades 356 and 358 and the spacing of pegs 362 may operate to present a generally staggered or offset orientation of pegs 362, which may be apparent as roller 350 is rotated. In one embodiment, blades 356 and 358 and pegs 362 are disposed so as to displace soil and extract debris in a back-and-forth type motion as distinct from a motion which would carry, thus windrow, loose soil as well as rocks and other debris during operation of implement 10.

As shown in Figures 1 and 2, when implement 10 is operated in a forward direction as depicted by arrow 328 and roller 270 or 350 is pivoted so that the left side of roller 270 and 350 is angled forward, the left side of roller 270 or 350 becomes the leading end and the right side thereof becomes the trailing end. Conversely, when implement 10 is being operated in the direction of arrow 328 and when the left end of roller 270 or 350 is pivoted so as to be angled rearward, the left end of roller 270 or 350 becomes the trailing end and the right side thereof becomes the leading end. If implement 10 is being operated while being towed in the direction of arrow 330, the leading and trailing ends are reversed, e.g., when the left side of roller 270 or 350 is pivoted so as to be angled forward, the left side of roller 270 or 350 become the trailing end thereof. In each case, the windrow will be formed by rocks and other debris displaced past (outboard) the trailing end of roller 270 or 350.

Functionally, implement 10 is mounted to a prime mover such as the Skid Steer™ and hydraulic hoses 312, 314, 328, and 330 are coupled to the prime mover's hydraulic systems. Hydraulic motor assembly 272 is capable of rotating rollers 270 and 350 in both directions If the operator desires to operate implement 10 in the direction of arrow 328, roller 270 or 350 may be advantageously rotated in the direction of arrow 370. Direction 370 is counter to direction 328 at the surface of the soil profile being prepared. If the operator desires to operate implement 10 in the direction of arrow 330, roller 270 or 350 may be advantageously rotated in the direction of arrow 374. Direction 374 is counter to direction 330 at the surface of the soil profile being prepared. While operated thusly, roller 270 or 350 is rotated generally counter to the direction of travel to enable pegs 306, 362 to pick up, separate, and displace rocks or other debris from the soil profile being prepared.

Implement 10 can also be operated when roller 270 or 350 is oriented substantially perpendicularly to the direction of travel. In operating implement 10 in this manner, rocks and other debris are lifted up and pushed ahead of the direction of travel. However, implement 10 may be operated advantageously when rollers 270 or 350 are disposed at an angle generally oblique to the direction of travel, thereby leaving rocks and other debris in windrows for more converted removal. Actuator 18 is advantageously employed as described above to orient rollers 270 or 350 to the desired angle When implement 10 is lowered such that wheel assemblies 28 contact the soil surface, roller 270 or 350 is maintained in contact with the soil surface that is raised or lowered to some extent by first frame assembly 12 to accommodate contours presented by the soil being worked. Moreover, as well as extracting rocks and debris from the soil profile being prepared, implement 10 generally planes or smooths the soil surface as well.

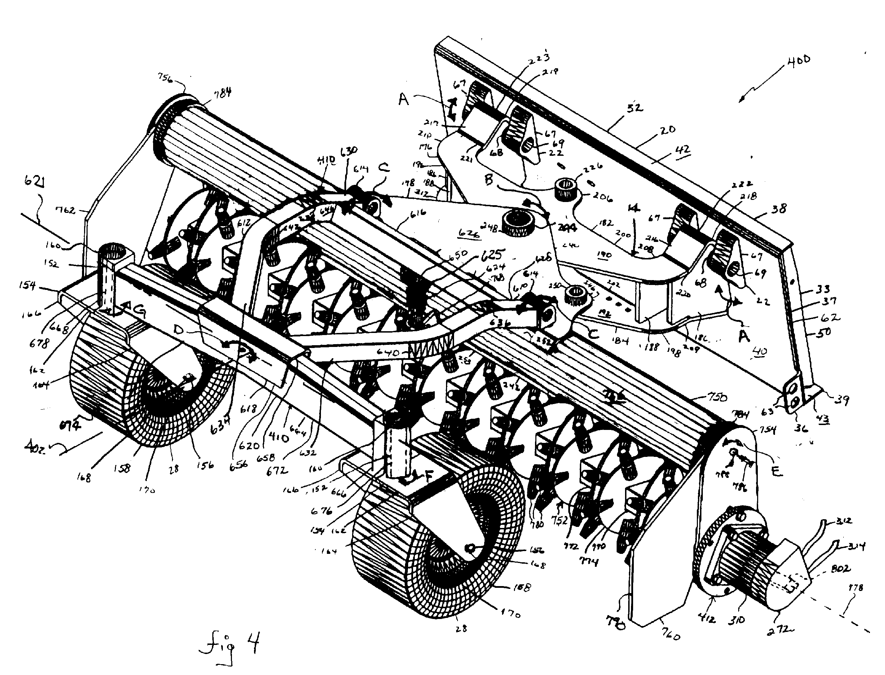

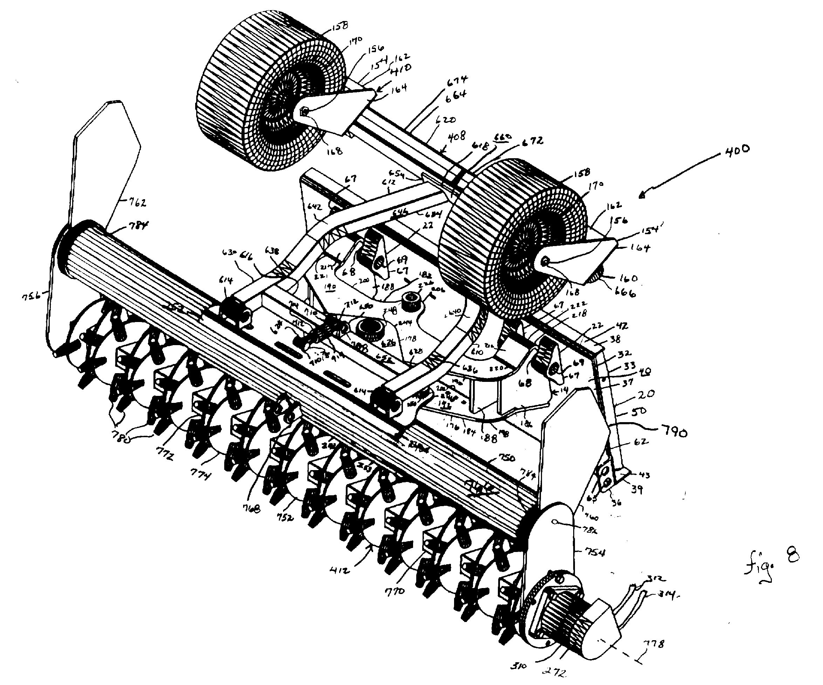

Referring to Figures 4-9, another embodiment of the soil preparation implement of this invention is depicted generally at 400. Implement 400 is partially described by longitudinal axis 402 (Figure 4) and includes mount 20, first frame assembly 14, wheel frame assembly 410, and roller assembly 412. Mount 20 and second frame assembly 14 are substantially as described above with respect to the embodiment of Figs 1-3. Pivoting action of the implement 400 is depicted at the various points of pivoting by arrows A-G in Figure 4.

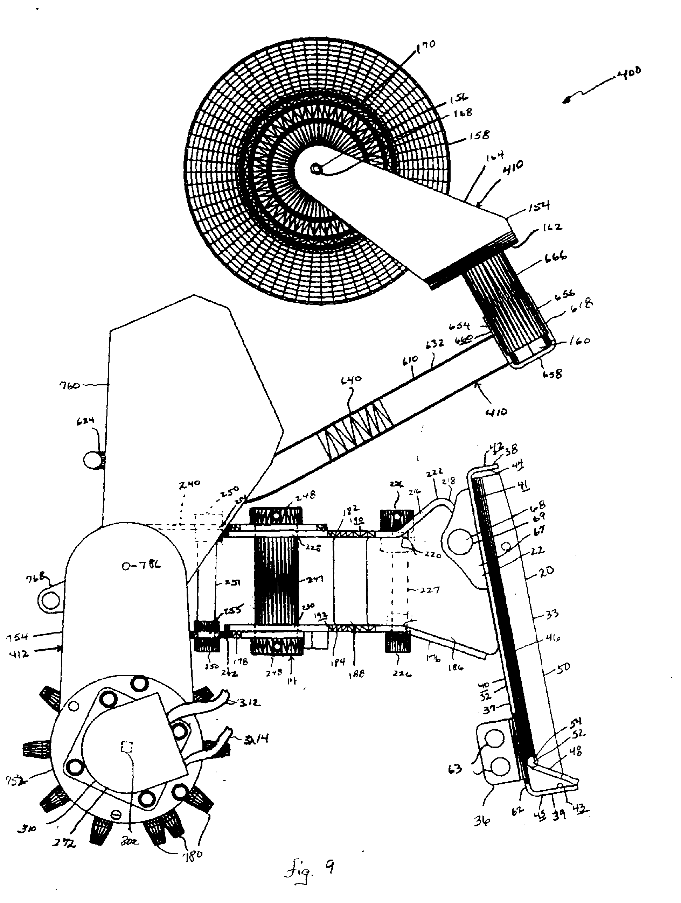

Wheel frame assembly 410 includes respective left and right frame members 610 and 612 defining a yoke, a plurality of first connectors 614, brace 616, connecting member 618, cross member 620. at least one wheel assembly 28 (described above), and second connector 624. Each left and right frame member 610 and 612 may be pivotally coupled to upper surface 626 of upper support plate 240 by first connector 614. Left and right frame members 610 and 612 further extend from first connectors 614, generally converging at connecting member 618. Left and right frame members 610 and 612 are generally unitary in this embodiment and include respective first portions 628 and 630 and second portions 632 and 634. First portions 628 and 630 join respective second portions 632 and 634 at bends 636 and 638. Second portions 632 and 634 angle inwardly at respective bends 640 and 642 in this embodiment. Brace 616 may be bonded to an inner surface of first portion 628 (not shown) and inner surface 646 of first portion 630 Bracket 650 may extend from lower surface 652 (Figure 8) of brace 616.

Exemplary unitary connecting member 618 includes respective generally vertical first and second elements 654 and 656 and generally horizontal third element 658 (Figure 5). Second portions 632 and 634 of left and right frame members 610 and 612 are bonded to rear surface 660 of connecting member 618 in this embodiment. Connecting member 618 may be rigidly secured to cross member 620. However, connecting member 618 may also be pivotally coupled to cross member 620 in a manner similar to that discussed above with respect to brace 78 and cross member 26 of soil preparation implement 10.

Cross member 620 includes inboard element 664 and respective left and right receiving elements 666 and 668. The longitudinal axis 621 of the cross member 620 is disposed generally orthogonal to the longitudinal axis 420 of the implement 400. Generally unitary inboard element 664 includes respective left and right portions 672 and 674. Left and right portions 672 and 674 may angle downwardly from the center of inboard element 664. Left and right receiving elements 666 and 668 are joined to outboard edges of inboard element 664 in this embodiment and define respective bores 676 and 678. While wheel frame assembly 410 is configured to accommodate cross member 620 and a pair of wheel members 28 in this embodiment, a person of ordinary skill in the art will readily understand how frame assembly 410 could be configured to accommodate one wheel assembly 28 as well, by mounting such wheel proximate the center point of connecting member 618. Such disposition would obviate the need for the cross member 620. Hence, this embodiment is contemplated to include configurations accommodating one or more wheel assemblies.

Connector 624 is pivotally coupled to bracket 650 of connecting member 618 in this embodiment. Bracket 650 defines a plurality of generally aligned bores 708. Connector 624 includes respective first and second portions 710 and 712 and adjustable portion 714. First and second portions 710 and 712, in turn, define respective bores 716 and 718 (Figures 5 and 8). In this embodiment, adjustable portion 714 threadably couples first and second portions 710 and 712. However, embodiments including a substantially unitary second connector 624 are within the scope of this invention as well. Connector 624 may be attached to bracket 650 by pin 720 secured within bore 708 of bracket 650 and bore 716 of first portion 710.

Roller assembly 412 includes drag bar 750, roller 752, respective left and right end plates 754 and 756, hydraulic assembly 272 (described above) and respective left and right shields 760 and 762 In this embodiment, drag bar 750 is generally circular (or otherwise arcuate) in cross section. Arcuate portions 252 and 253 of respective upper and lower support plates 240 and 242 are dimensioned to conform about, and attach to, generally opposite portions of exterior surface 766 of drag bar 750 of this embodiment in a similar manner to that described above with respect to drag bar 260. Bracket 768 may be affixed to drag bar 750 such that bracket 768 is portioned to receive connector 624.

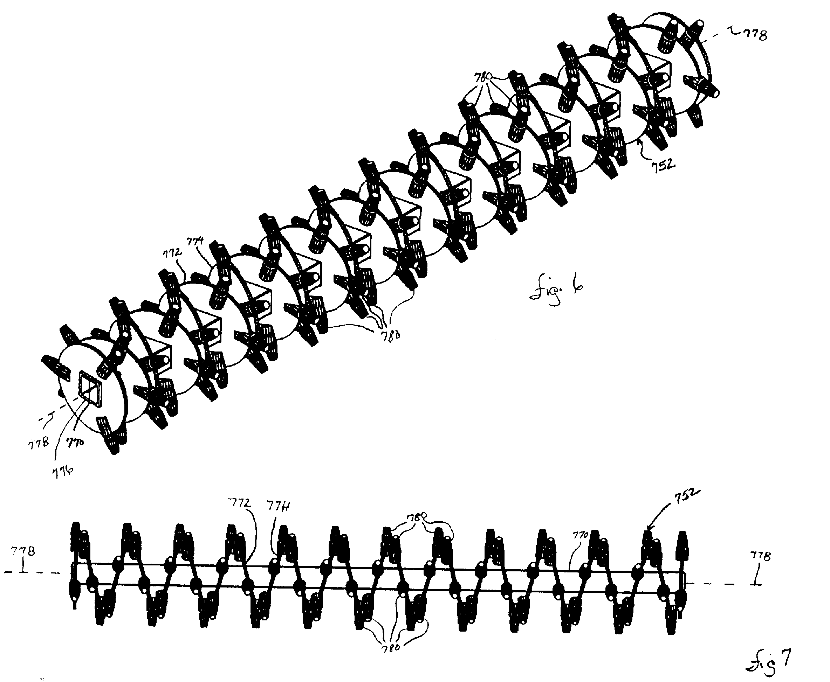

Referring to Figure 6-7, roller 752 includes a central member such as axial portion 770, about which at least one blade (flight), such as respective first and second blades 772 and 774 spirally (or helically) extend in a generally opposing manner. Axial portion 770 defines interior cavity 776. In one embodiment cavity 776 presents a square, or rectangular, cross sectional geometry and extends generally coaxially with longitudinal axis 778 of roller 752. A multiplicity of extraction members, such as pegs 780, may be affixed to peripheral surfaces of blades 772 and 774. One difference between roller 752 and roller 350 is that blades 772 and 774 may include fewer revolutions about axial portion 770 as compared to blades 356 and 358 and axial portion 352. However, blades 772 and 774 and pegs 780 may be configured such that extracted debris are displaced in a side-to-side manner rather than toward one end of roller 752.

As seen in Figures 4 and 8, respective left and right end plates 754 and 756 extend between, and couple, drag bar 750 and roller 752. A drum 784 may be disposed about, or affixed to, each outboard end of drag bar 750. Drag bar 750, end plate 754 or 756 and guards 760 and 762 are then coupled by extending a fastener such as bolt 786 through coaligning apertures therewithin (Figure 4) to define a point about which the respective guards 760, 762 may be pivoted. In this case, bolt 786 is accommodated through aperture 788 of left end plate 754 and an aligned aperture in left shield 760 and is threadably received in drum 784. A similar connector is also extended through apertures 762 and threaded into drum 784. Axle 802 is disposed in cavity 776 of roller 752. In this embodiment, axle 802 is relatively secured to a lower portion of right end plate 756 and extends through left end plate 754, where it is mechanically coupled to hydraulic motor 272.

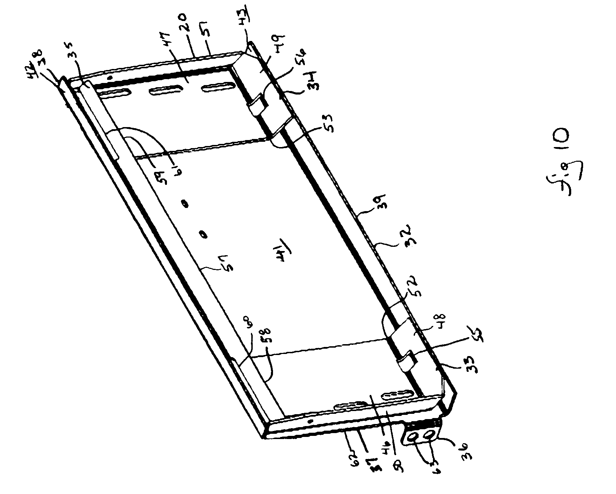

Operationally, embodiment 400 is attached to a prime mover and hydraulic hoses 312, 314, 328, and 330 are attached as described above. The hydraulic system of the prime mover can bi-directionally operate motor 310 to rotate roller 752 as described above as well. In a first position, second frame assembly 14 is positioned so that wheels 158 contact the ground being prepared. In this position, connector 624 is coupled to brackets 650 and 768 and second frame assembly 14 and wheel frame assembly 410 are configured in a generally overarching relationship with respect to roller assembly 412. However, connector 624 may be readily uncoupled from bracket 768 (as by removal of a transverse pin 625 disposed in connector 650) and wheel frame assembly 410 raised from the ground engageahle disposition of Figures 4 and 5 such that wheel assemblies 622 are disposed and rest substantially above roller 752 in a carry disposition of Figures 8 and 9.

To configure implement 400 in the second position, connector 624 is uncoupled from bracket 768 and wheel frame assembly 410 is pivoted at connectors 614 until wheel frame assembly 410 rests on upper support plate 240. This elevated, second position is necessary in situations where it is desirable to prepare ground immediately adjacent an object such as a building or tree or to reduce space necessary for transporting implement 400.

Referring to Figures 4 and 9, guards 760 and 762 may be pivoted between a front lowered, ground engageable position (Figure 4) and a generally elevated carry position (Figure 9). Referring to Figure 5, when end guards 760 and 762 are in the lowered, ground engageable position, the forward margin 790 of the guards 760, 762 is substantially forward of the foremost point 762 (defined by the horizontal radius 794 of the pegs 780) of the roller 270. In the ground engageable poition of the guards 760 and 762, debris extracted from a ground profile being prepared can be prevented from being deposited in windrows and may be deposited in discreet piles to facilitate removal. When guards 760 and 762 are in the raised carry position (an over-center disposition, as depicted in Figure 8), extracted debris may be windrowed as described above by canting the roller 412 with respect to the longitudinal axis 402.

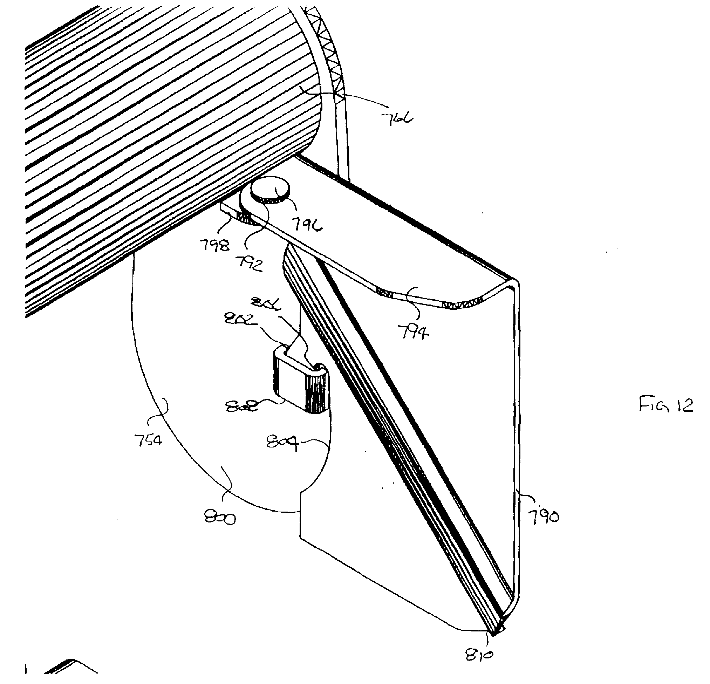

Referring to Figures 11 and 12, guards 780 and 782 are depicted in a generally frontward directed ground engageable disposition. The forward margin 790 of the guards 780, 782 is substantially forward of the foremost point 762 of the roller 412 (or roller 270), as defined above. The guards 780, 782 are removably coupled to the respective left and right end plates 754 and 756. Coupling is by lift-to-remove coupling devices so that the guards 780, 782 may be readily removed from the respective left and right end plates 754 and 756. Such devices include a bore 792 defined in an inwardly directed flange 794. The bore 792 is brought into registry with the upwardly directed pin 796 fixedly coupled to a pin bracket 798. The pin bracket 798 is preferably fixedly coupled to an inner face 800 of the respective left and right end plates 754 and 756. A second coupling device is a generally downwardly directed tongue 802 defined proximate a rear margin 804 of the guards 780 and 782. The tongue is disposable in a slot 806 defined by a U-shaped bracket 808 and the inner face of the respective left and right end plates 754 and 756. Lifting the guards 780 and 782 disengages the bore 792 from the pin 796 and the tongue 802 from the slot 806 to remove the guards 780 and 782 from the respective left and right end plates 754 and 756. The guards 780 and 782 preferably include a diagonal strengthening bend 810 that extends generally from the upper portion of the rear margin 804 to the lower portion of the front margin 790.

In the ground engageable position of the guards 780 and 782 of figures 11 and 12, debris extracted from a ground profile being prepared can be prevented from being deposited in windrows and may be deposited in discreet piles to facilitate removal. When guards 780 and 782 are removed, extracted debris may be windrowed as described above by canting the roller 412 (or roller 270) with respect to the longitudinal axis 402.

Because numerous modifications may be made of this invention without departing from the spirit thereof, the scope of the invention is not to be limited to the embodiments illustrated and described by rather by the appended claims and their equivalents.

## Claims

1. A roller configured for extracting and optionally windrowing debris from a soil profile, comprising:
a central support member disposed generally coincidentally with a longitudinal axis of the roller;
a first roller flight generally spirally affixed to the central support member and presenting a peripheral surface; and
a multiplicity of extraction members extending substantially radially from the roller flight peripheral surface.

2. The roller of claim 1, in which the central support member includes a generally rectangular cross section.

3. The roller of claim 1 or claim 2, further comprising a second roller flight generally oppositely spiralled with respect to the first roller flight.

4. The roller of any one of the preceding claims, in which the extraction members are generally cylindrical.

5. The roller of any one of the preceding claims, in which the flight and extracting members are configured and disposed for back-and-forth displacement of the extracted debris.

6. The roller of any one of the preceding claims, further comprising means for attachment to a reversible drive, preferably further comprising means for rotatable attachment to a soil preparation implement.

7. An implement for preparing a soil profile by extracting, and optionally windrowing debris from the soil profile, comprising:
a roller assembly comprising:
a generally cylindrical roller, and
a reversible drive in mechanical communication with the roller; and
a first frame in vertical and horizontal pivotal relationships with the roller and comprising:
a mount configured for attachment to a prime mover,
a longitudinal frame configurable to being disposed in an overarching relationship with the roller and having a proximal end and distal end, the proximal end of the longitudinal frame being fixedly coupled to the mount, and
a wheel assembly being coupled to the distal end of the longitudinal frame.

8. The implement of claim 7, in which the roller includes a multiplicity of extraction members.

9. The implement of claim 8, in which the extraction members extend generally radially from a roller surface.

10. The implement of claim 8, in which the extraction members include a generally cylindrical structure.

11. The implement of claim 7, in which the roller further comprises:
a central support member disposed generally coaxially with a longitudinal axis of the roller,
a first roller flight spirally affixed to the central support member and presenting a peripheral surface, and
a multiplicity of outwardly directed extraction members extending substantially radially from the roller flight peripheral surface.

12. The implement of claim 11, in which the roller further comprises a second roller flight generally oppositely spiralled with respect to the first roller flight.

13. The implement of any one of claims 7 to 12, further comprising a second frame in a generally vertical pivoting relationship with the mount, and comprising structure limiting downward vertical pivoting of the second frame relative to the mount and in a generally horizontal pivotal relationship with the roller, preferably wherein the second frame comprises a roller subframe operably coupled to a plurality of roller support plates, the roller subframe being in a vertical pivoting relationship with the mount, the roller support plates being in a horizontal pivoting relationship with the roller subframe and being rigidly coupled to the roller assembly.

14. The implement of claim 13, in which the vertical pivot limiting structure is disposed on the roller subframe and limits roller subframe downward vertical pivoting by contacting the mount.

15. The implement of claim 13, wherein the roller assembly further comprises a drag bar and first and second end plates, the drag bar being rigidly attached to the roller support plates and to the end plates, and the end plates rotatively supporting the roller, the first end plate further supporting the drive, preferably in which the drag bar is substantially circular in cross section.

16. The implement of any one of claims 7 to 15, wherein the first frame further comprises a cross member and first and second wheel assemblies, the cross member generally vertically pivotably coupled to the longitudinal frame member, and the first and second wheel assemblies being generally horizontally pivotally coupled to the cross member proximate respective first and second ends of the cross member.

17. The implement of any one of claims 7 to 16, wherein the longitudinal frame is pivotable between a first position in which the wheel assembly contacts the soil profile and a second position in which the wheel assembly is disposed substantially above the roller assembly.

18. A method of using an implement attachable to a prime mover to extract debris from a soil profile and generally plane the soil profile, the implement including:
a roller,
a reversible drive in mechanical communication with the roller and in hydraulic communication with the prime mover, and
a first frame in vertical and horizontal pivotal relation with the roller and comprising:
a mount attached to the prime mover,
a longitudinal frame conformable to a substantially rigid relationship with the mount and an overarching relationship with the roller, and
a wheel assembly in a pivotal relationship with the longitudinal frame,
the method comprising:
actuating the drive to rotate the roller in a first rotational direction,
contacting the roller with the soil profile,
operating the implement in a first direction counter to the first rotational direction, thereby extracting soil debris from, and generally planing, the soil profile.

19. The method of claim 18, further comprising:
rotating the roller in a second rotational direction, and
operating the implement in a second direction counter to the second rotational direction, thereby extracting soil debris from, and generally planing, the soil profile.

20. The method of claim 18, further comprising horizontally pivoting the roller, thereby presenting a roller trailing end and thereby depositing extracted debris outboard the roller trailing end in a windrow.

21. The method of claim 18, wherein the implement further comprises a roller subframe member being vertically pivotally coupled to the mount, in a generally horizontal pivotal relationship with the roller and including structure limiting downward pivoting of the roller subframe member, the method further including lifting the implement such that the roller is no longer in contact with the soil profile.

22. The method of claim 18 further including the stop of shifting wheel assembly between a first ground engageable disposition and a cary disposition, the carry dispootion being rearward of a forwardmost projection of the roller.

23. An amplement for preparing a ground profile by extracting and optionally windrowing debris from the ground profile and by generally planing the ground profile, the implement comprising:
a roller assembly having a ground engageable roller, a roller drive mechanism being to mechanical communication with the roller for imparting rotational motion thereto;
a first frame assembly having a first frame member, the first frame member being operably coupled to the roller and being disposed in a pivotal relationship with the roller about a first pivotal axis, a mount configured for attachment to a prime mover being operably pivotally coupled to the first frame member along a second pivotal axis, the second pivotal axis being generally orthogonally disposed with respect to the first pivotal axis; and
a wheel assembly being pivotally coupled to the first frame member and being shiftable between a ground engageable disposition and a carry disposition.

24. The implement of claim 23 wherein the wheel assembly carry disposition disposes the wheel assembly rearward of a forwardmost projection of the roller.

25. The implement of claim 23 or claim 24 wherein the wheel assembly includes an adjustable link for adjusting the relative height of the wheel assembly with respect to the roller assembly when the wheel assembly is in the ground engageable disposition, preferably wherein the wheel assembly adjustable link is readily disengageable from the wheel assembly for accommodating the shifting of the wheel assembly from the ground engageable disposition to the carry disposition.

26. The implement of any one of claims 23 to 25 wherein the wheel assembly includes a cross member, the cross member supporting two castering ground engageable wheels, the cross member being pivotable about an axis disposed substantially orthogonal to a cross member longitudinal axis.

27. The implement of any one of claims 23 to 26 further including a first guard being disposed proximate a roller first end and a second guard being disposed proximate a roller second end, the first and second guards being shiftable between a ground engageable disposition and a carry disposition.

28. The implement of claim 27 wherein first guard and the second guard each present a leading edge margin, the leading edge margins being disposed forward of a forwardmost projection of the roller when the first and second guards are in the ground engageable disposition.

29. The implement of claim 27 wherein the first guard and the second guard are pivotable about a respective pivot point, the carry disposition of the first guard and the second guard being generally upwardly-directed and being over-center with respect to the respective pivot points.

30. The implement of any one of claims 23 to 29 wherein the roller comprises:
a central support member disposed generally coincidentally with a longitudinal axis of the roller;
a first roller flight generally spirally affixed to the central support member and presenting a peripheral surface; and
a multiplicity of extraction members extending substantially radially from the roller flight peripheral surface.

31. The implement of claim 30 wherein the roller support member includes a generally rectangular cross section.

32. The implement of claim 30 or claim 31 wherein the roller includes a second roller flight generally oppositely spiralled with respect to the first roller flight.

33. The implement of claim 23 wherein the roller assembly includes roller subframe having a plurality of spaced apart generaly parallel roller support plates, the roller subframe being pivotally coupled to the first frame assembly about a generally vertically disposed pivot axis, preferably further including a hydraulic actuator operably coupled to the roller assembly and to the first frame assembly for selectively pivoting the roller assembly with respect to the first frame assembly.

34. The implement of any one of claims 23 to 33 wherein the roller drive mechanism is directly coupled to the ground engageable roller, preferably wherein the roller device mechanism is hydraulically actuated.

35. The implement of claim 23 further including a first guard being disposable proximate a roller first end and a second guard being disposable proximate a roller second end, the first and second guards projecting in a generally forward direction with respect to the roller in a fixed disposition, preferably wherein the first guard and the second guard are readily movable.

36. The implement of claim 13 wherein the first frame assembly first frame member pivotal motion with respect to the mount is limited by a first frame member face contacting a mount face for suspending the roller relative to the ground profile.
